# EUROPEAN PATENT SPECIFICATION

(11) **EP 4 116 380 B1**
(45) Date of publication and mention of the grant of the patent: **30.09.2026**
(21) Application number: 21764615.7
(22) Date of filing: 05.01.2021
(51) Int. Cl.: C09D 5/00, C09D 133/06, C08F 220/18

(54) **PRIMER COMPOSITION FOR GLASS ADHESIVE**
GRUNDIERZUSAMMENSETZUNG FÜR GLASKLEBER
COMPOSITION D'APPRÊT POUR ADHÉSIF POUR VERRE

(30) Priority: 05.03.2020 KR 20200027861
(43) Date of publication of application: 11.01.2023
(73) Proprietor: KCC Corporation, Seoul 06608 (KR)
(72) Inventor: LEE, Jeong Hyun, Ulsan 44262 (KR)
(74) Representative: Newcombe, Christopher David
(86) International application number: PCT/KR2021/000091
(87) International publication number: WO 2021/177586

(56) References cited:
- EP-A1- 1 172 424
- EP-A1- 1 905 805
- JP-A- 2008 133 307
- JP-A- 2019 073 593
- KR-A- 20020 007 345
- KR-A- 20030 026 916
- KR-A- 20180 003 354
- KR-B1- 100 528 700
- US-A1- 2006 058 451
- US-A1- 2009 297 856
- US-A1- 2019 203 056
- ANONYMOUS: "EPONEXResin 1510 - Technical Data Sheet", 1 December 2005 (2005-12-01), pages 1 - 2, XP093055752, Retrieved from the Internet <URL:https://www.miller-stephenson.com/wp-content/uploads/2016/08/1510.pdf> [retrieved on 20230620]

## Description

### [Technical Field]

The present invention relates to a primer composition for a glass adhesive that has excellent storage property, adhesive retention after application, and adhesiveness, and does not cause sedimentation problems.

### [Background Art]

When bonding glass to the painting surface of a vehicle body, in order to prevent the glass from being pushed or detached from the painting surface due to insufficient adhesive force between the painting surface and the glass, it is, in general, common to apply a primer to the painting surface first, and then use a moisture hardening type adhesive on the primer. In this case, the moisture hardening type adhesive contains urethane resin which is a reactant of isocyanate and polyol as a resin component, and contains carbon black, calcium carbonate, etc. as a pigment component, and contains a plasticizer such as diisononyl phthalate (DINP). In addition, the conventional primer composition contains a film-forming agent such as an epoxy resin, a silane polymer, or an acrylic resin; and additives such as a pigment such as carbon black and an inorganic filler (for example, titanium oxide, calcium carbide and silicic acid anhydride, etc.).

However, the conventional primer composition has a problem of insufficient storage property due to additives such as a pigment or an inorganic filler, or a problem of insufficient storage stability due to the precipitation of the pigment or the inorganic filler. In order to solve this problem, it was common that the conventional primer composition contains a dispersant. However, the conventional primer composition containing a dispersant and a pigment or an inorganic filler requires an additional dispersion process, which has a limitation in lowering economic feasibility, and has limitations in that storage property and sedimentation problems occur due to a pigment or an inorganic filler.

As an alternative to this, Korean Laid-Open Patent Application No. 2017-0016433 (Patent Document 1) discloses a primer composition comprising an acrylic copolymer, a titanium compound, and a solvent. However, the composition of Patent Document 1 had poor adhesion due to lack of wettability with the ceramic coating surface of automobile glass, and had a problem in that water resistance and chemical resistance were inferior due to mono-silane and titanium compound. US2006058451 discloses fast curing modified siloxane compositions.

Therefore, there is a need for research and development on a primer composition for a glass adhesive, which does not contain a pigment such as carbon black and an inorganic filler, so that the dispersion process can be omitted, and does not contain a dispersant and thus has excellent economic feasibility, and has excellent storage stability because a pigment and an inorganic filler do not precipitate, and has excellent adhesive force with glass.

### [Disclosure]

### [Technical Problem]

Accordingly, it is an object of the present invention to provide a primer composition for a glass adhesive which has excellent storage stability (no precipitation occurs) by not including a pigment such as carbon black and an inorganic filler, and thus has excellent economic feasibility by omitting the dispersion process since it does not need to include a separate dispersant, and also has excellent adhesive force with glass.

### [Technical Solution]

The present invention provides a two-component primer composition for a glass adhesive comprising, a main part which comprises a silane polymer, a first epoxy resin and an acrylic polymer; and
a curing agent part which comprises a second epoxy resin,
wherein the epoxy equivalent of the first epoxy resin is smaller than the epoxy equivalent of the second epoxy resin, and
wherein the main part contains 20 to 50 parts by weight of a silane polymer, 0.1 to 10 parts by weight of a first epoxy resin and 10 to 30 parts by weight of an acrylic polymer, the silane polymer is prepared from a silane composition containing an epoxy silane and an amino silane, and wherein the composition does not contain inorganic pigments and dispersants.

### [Advantageous Effects]

The primer composition for the glass adhesive according to the present invention does not contain a pigment such as carbon black and an inorganic filler, and thus the dispersion process can be omitted, and it does not contain a dispersant, thereby having excellent economic feasibility. In addition, the primer composition for the glass adhesive has excellent storage stability because precipitation of the pigment and the inorganic filler does not occur, and it is excellent in adhesive force with glass and thus is suitable for use for fixing the glass of the automobile.

### [Best Mode]

Hereinafter, the present invention will be described in detail.

In the present invention, the term "(meth)acryl" means "acryl" and/or "methacryl" and the term "(meth)acrylate" means "acrylate" and/or "methacrylate".

Also, in the present invention, the functional value such as 'the epoxy equivalent' may be measured by a method well known in the art, and for example, it may be a value measured by titration or the like.

The primer composition for the glass adhesive according to the present invention is a two-component type, and comprises a main part comprising a silane polymer, a first epoxy resin and an acrylic polymer; and a curing agent part comprising a second epoxy resin.

### Main part

### Silane polymer

The silane polymer serves to impart adhesiveness to the substrate and glass, which are attachment surfaces for the prepared coating.

The silane polymer is prepared from a silane composition including epoxy silane and amino silane. Specifically, the silane polymer may be prepared by reacting the silane composition containing epoxy silane and amino silane at 40 to 60 °C for 20 to 50 hours.

In this case, the epoxy silane may be, for example, glycidoxyC₁₋₅ alkylC₁₋₅ alkoxy silane, and specifically, may be glycidoxyC₁₋₅ alkyltriC₁₋₅ alkoxy silane. Specifically, the epoxy silane may be glycidoxymethyltrimethoxy silane, glycidoxyethyltrimethoxy silane, glycidoxypropyltrimethoxy silane, glycidoxymethyltriethoxy silane, glycidoxyethyltriethoxy silane, glycidoxypropyltriethoxy silane, glycidoxymethyltripropoxy silane, glycidoxyethyltripropoxy silane, glycidoxypropyltripropoxy silane and the like.

In addition, the amino silane may be, for example, a silane containing one or more amino groups, and specifically, a silane containing two or more amino groups. Specifically, the amino silane may be aminoC₁₋₅ alkyl-triC₁₋₅ alkoxy silane, and for example, may be aminomethyl-trimethoxy-silane, aminoethyl-trimethoxy-silane, aminopropyl-trimethoxy-silane and the like.

The silane composition may comprise a solvent, and the solvent may be methylethylketone, ethyl acetate, dimethylcarbonate, n-butanol, and the like. In addition, the silane composition may comprise 80% by weight or less, or 60 to 80% by weight of the solvent based on the total weight of the composition.

The silane composition may comprise epoxy silane and amino silane in a weight ratio of 1: 0.1 to 0.9, or 1: 0.3 to 0.7.

In addition, the silane polymer may have an epoxy equivalent (EEW) of 2,000 to 15,000 g/eq, or 3,000 to 13,000 g/eq, and a weight average molecular weight (Mw) of 500 to 4,000 g/mol, or 1,000 to 3,000 g/mol. If the epoxy equivalent and the weight average molecular weight of the silane polymer are within the above ranges, the storage property and adhesiveness of the composition are excellent.

The silane polymer is contained in the composition in a content of 20 to 50 parts by weight, or optionally 30 to 40 parts by weight relative to 0.1 to 10 parts by weight of the first epoxy resin. If the content of the silane polymer is within the above range, the storage property and adhesiveness are excellent. On the other hand, if the content of the silane polymer is less than the above range, the shear strength of the prepared coating may be deteriorated. If the content of the silane polymer exceeds the above range, the storage property of the composition may be deteriorated.

### First epoxy resin

The first epoxy resin serves to impart tacky and adhesiveness to the primer composition.

The first epoxy resin is not particularly limited as long as it is usually used for a paint or a primer composition, and for example, may be a bisphenol type epoxy resin, an alicyclic epoxy resin, an aliphatic chain epoxy resin, a phenol novolac type epoxy resin, a cresol novolac type epoxy resin, a diglycidyl ether of biphenol, a diglycidyl ether of naphthalenediol, a diglycidyl ether phenols, a diglycidyl ether of alcohols, a polyfunctional epoxy resin, a heterocyclic containing epoxy resin and the like. Specifically, the first epoxy resin may be at least one selected from the group consisting of a bisphenol A type epoxy resin, a bisphenol F type epoxy resin, and a bisphenol S type epoxy resin.

In addition, the first epoxy resin may have a smaller weight average molecular weight (Mw) than a second epoxy resin to be described later. For example, the first epoxy resin may have a weight average molecular weight of 500 g/mol or less, or 300 to 400 g/mol. If the weight average molecular weight of the first epoxy resin is within the above range, there is an effect that the storage property of the composition is excellent.

The epoxy equivalent of the first epoxy resin is smaller than the epoxy equivalent of the second epoxy resin. For example, the first epoxy resin may have an epoxy equivalent (EEW) of less than 800 g/eq, or 100 to 500 g/eq. If the epoxy equivalent of the first epoxy resin is within the above range, there is an effect that the storage property of the composition is excellent. On the other hand, if the first epoxy resin has a larger epoxy equivalent and a smaller weight average molecular weight than the second epoxy resin, side reactions may occur and the storage property of the composition may be deteriorated.

The first epoxy resin may have a viscosity of 8,000 to 20,000 cps, or 10,000 to 15,000 cps at 25 °C. If the viscosity of the first epoxy resin at 25 °C is within the above range, the storage property of the composition is excellent.

The first epoxy resin may have a specific gravity of 0.8 to 1.5, or 1.0 to 1.3 at 20°C. If the specific gravity of the first epoxy resin at 20°C is within the above range, the storage property of the composition is excellent.

The first epoxy resin is contained in the composition in an amount of 0.1 to 10 parts by weight, or optionally 1 to 5 parts by weight for the silane polymer of 20 to 50 parts by weight. If the content of the first epoxy resin is within the above range, the storage property is excellent. On the other hand, if the content of the first epoxy resin is less than the above range, the adhesiveness of the prepared coating may be deteriorated. If the content of the first epoxy resin exceeds the above range, the workability of the composition may be deteriorated.

### Acrylic polymer

The acrylic polymer serves to impart tacky and adhesiveness to the primer composition.

The acrylic polymer may be directly synthesized according to a known method, or a commercially available product may be used. In this case, the acrylic polymer, for example, may be prepared from an acrylic composition comprising an alkyl group containing (meth)acrylate monomer and a hydroxyl group and an aromatic ring containing (meth)acrylate monomer. Specifically, the acrylic polymer may be prepared from an acrylic composition comprising a C₁₋₃ alkyl group containing (meth)acrylate monomer, a C₄₋₁₀ alkyl group containing (meth)acrylate monomer and a hydroxyl group and C₆₋₁₂ aromatic ring containing (meth)acrylate. For example, the acrylic polymer may be prepared from an acrylic composition comprising a C₁₋₃ alkyl group containing (meth) acrylate monomer, a C₄₋₁₀ alkyl group containing (meth) acrylate monomer and a hydroxyl group and C₆₋₁₂ aromatic ring containing (meth)acrylate in a weight ratio of 1:1 to 3:0.1 to 0.5.

More specifically, the acrylic polymer may be prepared by polymerizing the acrylic composition as described above at 60 to 100 °C for 5 to 20 hours.

The acrylic composition may comprise a solvent, and the solvent may be methylethylketone, ethyl acetate, dimethyl carbonate, n-butanol, or the like. In addition, the acrylic composition may contain 80% by weight or less, or 60 to 80% by weight of the solvent based on the total weight.

In addition, the acrylic composition may further comprise an epoxy group containing (meth)acrylate monomer. In this case, the epoxy group containing (meth)acrylate monomer may be, for example, but is not limited to, glycidyl (meth)acrylate, methyl glycidyl acrylate, 3,4-epoxycyclohexylmethacrylate, 4-(oxiran-2-ylmethoxy)butyl prop-2-enoate(CAS NO 119692-59-0) or the like. The epoxy group containing (meth)acrylate monomer may be contained in the acrylic composition in a content of 0.001 to 15 parts by weight, or 0.01 to 10 parts by weight relative to a total of 100 parts by weight of the acrylic composition. If the content of the epoxy group containing (meth)acrylate monomer is within the above range, the adhesiveness and workability are excellent.

In addition, the acrylic polymer may have a weight average molecular weight (Mw) of 170,000 to 220,000 g/mol or 180,000 to 210,000 g/mol, a glass transition temperature (Tg) of 40 to 60 °C or 45 to 55 °C and a viscosity of 400 to 1,000 cps, or 600 to 900 cps at 25 °C. If the weight average molecular weight of the acrylic polymer, the glass transition temperature, and the viscosity at 25 °C are within the above ranges, there in an effect that the adhesiveness and workability are excellent.

The acrylic polymer is contained in the composition at a content of 10 to 30 parts by weight, or optionally 15 to 25 parts by weight relative to 20 to 50 parts by weight of the silane polymer. If the content of the acrylic polymer is within the above range, there is an effect that the adhesiveness and workability are excellent. On the other hand, if the content of the acrylic polymer is less than the above range, the adhesiveness may be reduced. If the content of the acrylic polymer exceeds the above range, the workability may be reduced.

### Additive for main part

The main part may further comprise one or more additives for the main part, such as a storage stabilizer, a solvent, and a moisture absorbent to improve the physical properties of the coating.

In this case, the additive for main part may be contained in the composition in a content of 10 to 40 parts by weight, or 15 to 30 parts by weight relative to the silane polymer of 20 to 50 parts by weight.

The storage stabilizer plays a role in improving the stability of the primer composition. In this case, the storage stabilizer is not particularly limited as long as it can be added to the general primer composition for glass, and for example, may be a dialkylmalonic acid such as dimethylmalonic acid, diethylmalonic acid, or diisopropylmalonic acid. In addition, the storage stabilizer may be contained in the composition in an amount of 0.1 to 10 parts by weight, or 0.1 to 3 parts by weight relative to the silane polymer of 20 to 50 parts by weight.

The solvent plays a role in controlling the viscosity and dryness of the composition. In this case, the solvent is not particularly limited as long as it can be added to the general primer composition for glass, and for example, may be aromatic hydrocarbons such as toluene and xylene, aliphatic hydrocarbons such as hexane, octane, and isoparaffin, ketones such as acetone, methylethylketone, and methyl isobutyl ketone, acetates such as ethyl acetate and isobutyl acetate, ethers such as diisopropyl ether and 1,4-dioxane, carbonates such as dimethyl carbonate and diethyl carbonate, or the like. In addition, the solvent may be contained in the composition at a content of 10 to 40 parts by weight, or 15 to 30 parts by weight relative to the silane polymer of 20 to 50 parts by weight.

### Curing agent part

### Second epoxy resin

The second epoxy resin plays a role in imparting tacky and adhesiveness to the primer composition and in forming a coating as a curing agent.

The second epoxy resin is not particularly limited as long as it is usually used for a paint or a primer composition, and for example, may be bisphenol type epoxy resin, alicyclic epoxy resin, aliphatic chain epoxy resin, phenol novolac type epoxy resin, cresol novolac type epoxy resin, diglycidyl ether of biphenol, diglycidyl ether of naphthalenediol, diglycidyl ether of phenols, diglycidyl ether of alcohols, polyfunctional epoxy resin, heterocyclic containing epoxy resin or the like. Specifically, the second epoxy resin may be at least one selected from the group consisting of a bisphenol A type epoxy resin, a bisphenol F type epoxy resin, and a bisphenol S type epoxy resin.

In addition, the second epoxy resin may have a greater weight average molecular weight (Mw) than the first epoxy resin. For example, the second epoxy resin may have a weight average molecular weight of 1,000 to 4,500 g/mol, or 2,000 to 4,000 g/mol. If the weight average molecular weight of the second epoxy resin is within the above range, there is an effect that the adhesiveness is excellent.

The epoxy equivalent of the second epoxy resin is greater than the epoxy equivalent of the first epoxy resin. For example, the second epoxy resin may have the epoxy equivalent (EEW) of 800 to 3,000 g/eq, or 1,000 to 2,000 g/eq. If the epoxy equivalent of the second epoxy resin is within the above range, there is an effect that the adhesiveness is excellent.

In addition, the second epoxy resin may have a viscosity of 2,000 to 9,000 cps, or 3,000 to 8,000 cps, measured with an ICI viscometer at 150 °C. If the viscosity of the second epoxy resin is within the above range, there is an effect that the adhesiveness is excellent.

The second epoxy resin may be contained in the composition at a content of 1 to 10 parts by weight, or 3 to 8 parts by weight relative to 20 to 50 parts by weight of the silane polymer. If the content of the second epoxy resin is within the above range, there is an effect that the adhesiveness is excellent. On the other hand, if the content of the second epoxy resin is less than the above range, the adhesiveness may be reduced. If the content of the second epoxy resin exceeds the above range, the workability may be reduced.

### Additive for curing agent part

The curing agent part may further comprise at least one additive for the curing agent part selected from the group consisting of a curing catalyst and an organic solvent.

The curing catalyst plays a role in controlling the curability of the primer composition. The curing catalyst may be, for example, metal compounds such as dibutyltin diacetate, dibutyltin dilaurate, stannous octoate, and dibutyltin mercaptide; tertiary amines such as triethyldiamine, triethanolamine, 1,4-diazocyclooctane, dimethylethanolamine, ethylmorphyrin, dimethylaminoethylmorpholine, and dimethylcyclohexylamine; and alkali metal carboxylates or zinc-based complexes. There is no particular limitation on the amount of the curing catalyst used, but it can be used at a level that does not cause difficulties in securing pot time.

The organic solvent plays a role in controlling the viscosity and dryness of the composition. In this case, the organic solvent is not particularly limited as long as it can be added to the conventional primer composition for glass, and for example, may be aromatic hydrocarbons such as toluene and xylene, aliphatic hydrocarbons such as hexane, octane, and isoparaffin, ketones such as acetone, methylethyl ketone, and methylisobutyl ketone, acetates such as ethyl acetate and isobutyl acetate, ethers such as diisopropyl ether and 1,4-dioxane, or carbonates such as dimethyl carbonate and diethyl carbonate.

In this case, the additive for the curing agent part may be contained in the composition at a content of 5 to 40 parts by weight, or 10 to 30 parts by weight relative to a second epoxy resin of 1 to 10 parts by weight.

The primer composition may contain the curing agent part and the main part in a weight ratio of 1: 1 to 5, or in a weight ratio of 1: 2 to 4.5. If the mixing ratio of the curing agent part and the main part is less than the above range, the physical properties of the coating such as hardness and water resistance may be reduced. If the mixing ratio exceeds the above range, the drying property of the coating may be reduced.

The curing agent part and the main part may be stored in separate containers and sufficiently mixed immediately before use.

In addition, the primer composition may not contain inorganic pigments and dispersants. The primer composition for the glass adhesive according to the present invention as described above does not contain a pigment such as carbon black and an inorganic filler, and thus the dispersion process can be omitted, and it does not contain a dispersant, thereby having excellent economic feasibility. In addition, the primer composition for the glass adhesive has excellent storage stability because precipitation of the pigment and the inorganic filler does not occur, and it is excellent in adhesive force with glass and thus is suitable for use for fixing the glass of the automobile.

Hereinafter, the present invention will be described in more detail through examples. However, these examples are only for helping the understanding of the present invention, and the scope of the present invention is not limited to these examples in any sense.

### [Example]

### Synthesis Example 1. Preparation of silane polymer-1

To a reaction vessel, 4 parts by weight of N-(beta-aminoethyl)-gamma-aminopropyl-trimethoxy-silane, 9 parts by weight of gamma-glycidoxypropyltrimethoxy-silane, 8 parts by weight of methylethylketone, 14 parts by weight of dimethyl carbonate and 1 part by weight of n-butanol were added and reacted at 60°C for 48 hours to prepare a silane polymer-1.

The prepared silane polymer-1 had an epoxy equivalent (EEW) of 3,500 g/eq and a weight average molecular weight (Mw) of 2,800 g/mol.

### Synthesis Example 2. Preparation of silane polymer-2

A silane polymer-2 was prepared in the same way as in Synthesis Example 1, except that as a monomer, gamma-glycidoxypropyltrimethoxy-silane was not used.

The prepared silane polymer-2 had an epoxy equivalent (EEW) of 0 g/eq (the epoxy equivalent does not exist as no epoxy silane is used) and a weight average molecular weight (Mw) of 222 g/mol.

### Synthesis Example 3. Preparation of acrylic polymer-1

To a reaction vessel, 12 parts by weight of methylethylketone, 2 parts by weight of methyl methacrylate (MMA), 4 parts by weight of butyl methacrylate(BMA), 0.5 parts by weight of 2-hydroxy-3-phenoxypropylacrylate(HPPA) and 0.05 parts by weight of tert-butyl peroxide as an initiator were added, and reacted at 80°C for 12 hours to prepare an acrylic polymer-1.

The prepared acrylic polymer-1 had a weight average molecular weight (Mw) of 200,000 g/mol, a glass transition temperature (Tg) of 48.1 °C, and a viscosity of 800 cps at 25 °C.

### Synthesis Example 4. Preparation of acrylic polymer-2

An acrylic polymer-2 was prepared in the same way as in Synthesis Example 2, except that as a monomer, 2-hydroxy-3-phenoxypropyl acrylate (HPPA) was not used.

The prepared acrylic polymer-2 had a weight average molecular weight (Mw) of 100 g/mol, a glass transition temperature (Tg) of 0 °C, and a viscosity of 10 cps at 25 °C.

### Synthesis Example 5. Preparation of acrylic polymer-3

An acrylic polymer-3 was prepared in the same way as in Synthesis Example 3, except that as a monomer, 3 parts by weight of methyl methacrylate (MMA), 5 parts by weight of butyl methacrylate (BMA), and 1.2 parts by weight of 2-hydroxy-3-phenoxypropyl acrylate (HPPA) were used.

The prepared acrylic polymer-3 had a weight average molecular weight (Mw) of 200,000 g/mol, a glass transition temperature (Tg) of 47.2 °C, and a viscosity of 700 cps at 25 °C.

### Synthesis Example 6. Preparation of acrylic polymer-4

An acrylic polymer-4 was prepared in the same way as in Synthesis Example 3, except that to a reaction vessel, 11 parts by weight of methylethyl ketone, 2 parts by weight of methyl methacrylate (MMA) as a monomer, 4 parts by weight of butyl methacrylate (BMA), 0.5 parts by weight of 2-hydroxy-3-phenoxypropyl acrylate (HPPA), and 1 part by weight of glycidyl methacrylate (GMA) and 0.05 parts by weight of tert-butyl peroxide as an initiator were added.

The prepared acrylic polymer-4 had a weight average molecular weight (Mw) of 200,000 g/mol, a glass transition temperature (Tg) of 48.4 °C, and a viscosity of 850 cps at 25 °C.

### Examples 1 to 8 and Comparative Examples 1 to 7. Preparation of primer composition

Primer compositions were prepared by mixing the contents of each component described in Tables 1 and 2.

**Table 1:**

| Component (part by weight) | | Example 1 | Example 2 | Example 3 | Example 4 | Example 5 | Example 6 | Example 7 | Example 8 |
|---|---|---|---|---|---|---|---|---|---|
| Main part | silane polymer-1 | 36 | 31 | 25 | 32 | - | 36 | 36 | 36 |
| | silane polymer-2 | - | - | - | - | 36 | - | - | - |
| | first epoxy resin-1 | 3 | 4 | 5 | 8 | 3 | 3 | 3 | 3 |
| | acrylic polymer-1 | 18.55 | 24 | 25 | 20 | 18.55 | - | - | - |
| | acrylic polymer-2 | - | - | - | - | - | 18.55 | - | - |
| | acrylic polymer-3 | - | - | - | - | - | - | 21 | - |
| | acrylic polymer-4 | - | - | - | - | - | - | - | 18.55 |
| | storage stabilizer | 0.5 | 0.5 | 0.5 | 0.5 | 0.5 | 0.5 | 0.5 | 0.5 |
| | solvent-1 | 16.2 | 16.2 | 16.2 | 16.2 | 16.2 | 16.2 | 16.2 | 16.2 |
| | solvent-2 | 5 | 5 | 5 | 5 | 5 | 5 | 5 | 5 |
| Curing part | second epoxy resin | 6 | 5.2 | 8 | 3 | 6 | 6 | 6 | 6 |
| | solvent-1 | 5 | 5 | 5 | 5 | 5 | 5 | 4 | 5 |
| | solvent-2 | 9.45 | 9 | 10 | 10 | 9.45 | 9.45 | 8 | 9.45 |
| | curing catalyst | 0.3 | 0.1 | 0.3 | 0.3 | 0.3 | 0.3 | 0.3 | 0.3 |
| Total | | 100 | 100 | 100 | 100 | 100 | 100 | 100 | 100 |

**Table 2:**

| Component (part by weight) | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Main part | silane polymer-1 | 17 | 51 | 38 | 30 | 36 | 39 | 33 |
| | first epoxy resin-1 | 9 | 2 | - | 14 | - | 3 | 3 |
| | first epoxy resin-2 | - | - | - | - | 3 | - | - |
| | acrylic polymer-1 | 28 | 15 | 19 | 16 | 18 | 18 | 16 |
| | storage stabilizer | 0.5 | 0.5 | 0.5 | 0.5 | 0.5 | 0.5 | 0.5 |
| | solvent-1 | 16.2 | 10.2 | 16.2 | 16.2 | 16.2 | 17.2 | 15.2 |
| | solvent-2 | 5 | 5 | 5 | 5 | 5 | 5 | 5 |
| Curing part | second epoxy resin | 8 | 3 | 6 | 4 | 6 | - | 4 |
| | solvent-1 | 5 | 4 | 5 | 5 | 5 | 5 | 4 |
| | solvent-2 | 11 | 9 | 10 | 9 | 10 | 12 | 9 |
| | curing catalyst | 0.3 | 0.3 | 0.3 | 0.3 | 0.3 | 0.3 | 0.3 |
| | carbon black | - | - | - | - | - | - | 10 |
| Total | | 100 | 100 | 100 | 100 | 100 | 100 | 100 |

Table 3 below shows manufacturers and product names of each component used in Comparative Examples and Examples.

**Table 3:**

| Component | Manufacturer and product name | Remarks |
|---|---|---|
| first epoxy resin-1 | Manufacturer: Kukdo Chemical, product name: YD-128 | Bisphenol A type epoxy resin (EEW: 187g/eq, Mw: 374g/mol, Viscosity at 25 °C: 12,500cps, Specific gravity at 20°C: 1.17) |
| first epoxy resin-2 | Manufacturer: Kukdo Chemical, product name: YD-017 | Bisphenol A type epoxy resin (EEW: 1,500g/eq, Mw: 3,800g/mol, ICI viscosity at 150 °C: 10,000cps) |
| Storage stabilizer | - | Diethyl malonate |
| Solvent-1 | - | Ethyl acetate |
| Solvent-2 | - | Dimethyl carbonate |
| Second epoxy resin | Manufacturer: KCC, product name: CNE00105 | Bisphenol A type epoxy resin (EEW: 1,100~1,200g/eq, Mw: 2,300g/mol, ICI viscosity at 150 °C: 8,000cps) |
| Curing catalyst | - | Dibutyltin dilaurate |

### Experimental example: Evaluation of physical properties

After preparing specimens from the primer compositions of Examples and Comparative Examples by a method based on the HMC standard (MS715-25), physical properties were measured in the following manner, and the results are shown in Table 4 below.

### (1) Adhesiveness

The primer composition was applied to the painting surface at 120 mm (length) X 10 mm (width) X 5 mm (thickness) and cured at 20 °C and 65 % relative humidity for 7 days to form a primer layer. Thereafter, the primer layer on one end of the test piece was cut with a 15 mm knife, and the substrate of the painting was held with one hand and peeled off using a knife at an angle of 30°. After curing, the adhesiveness was evaluated by calculating the residual area of the primer layer that was not peeled off as a percentage as compared to the total area of the primer layer. In this case, the adhesiveness was evaluated to be better as the remaining area was higher.

### (2) Storage property

After measuring the initial viscosity at 20 °C, the viscosity was measured again after storage at 60 °C for 10 days. Thereafter, the viscosity change rate (%) was calculated based on the initial viscosity, and as for the evaluation criteria, if the viscosity change rate (%) was less than 10%, it was evaluated as excellent, if it was 10% or more and less than 20%, it was evaluated as normal, and if it was 20% or more, it was evaluated as poor.

### (3) Pot time

The compositions of Examples or Comparative Examples are applied to a glass surface with an application area of 25 mm (width) X 150 mm (length) X 3 mm (height), and after standing for 110 hours at 20 °C and 65% relative humidity, a urethane sealant (manufacturer: KCC, product name: PU9510(S-P2P)) and adhesive (manufacturer: KCC, product name: PU9370-BTX) were pressed thereon to prepare a test piece.

When 7 days had elapsed at 20 °C and 65% relative humidity, the peel test of the test piece was conducted in the same manner as in item (1), and then the state of the adhesive interface was observed. The evaluation criteria are as follows:
Excellent: cohesive failure of exceeding 90% in the sealant layer
Normal: cohesive failure of 30% or more and 90% or less in the sealant layer
Poor: the sealant-primer layer interface is broken, and the cohesive failure of the sealant layer is less than 30%

### (4) Shear strength

The compositions were coated and cured for 7 days at 20 °C and 65% relative humidity to prepare a 5 mm thick dogbone-shaped specimen, and then the shear strength was measured with a UTM (Universal Testing Machine).

**Table 4:**

| Physical property | Adhesiveness (%) | Storage property | Pot time | Shear strength (Mpa) |
|---|---|---|---|---|
| Example 1 | 100 | excellent | excellent | 4.1 |
| Example 2 | 100 | excellent | excellent | 4.1 |
| Example 3 | 95 | excellent | normal | 3.9 |
| Example 4 | 95 | normal | normal | 3.8 |
| Example 5 | 80 | normal | normal | 3.7 |
| Example 6 | 90 | normal | normal | 4.1 |
| Example 7 | 100 | excellent | normal | 4 |
| Example 8 | 100 | excellent | excellent | 4.1 |
| Comparative Example 1 | 80 | normal | normal | 2.9 |
| Comparative Example 2 | 90 | poor | normal | 3.7 |
| Comparative Example 3 | 90 | poor | normal | 3.2 |
| Comparative Example 4 | 70 | normal | normal | 2.7 |
| Comparative Example 5 | 90 | poor | normal | 3.1 |
| Comparative Example 6 | 70 | normal | normal | 2.7 |
| Comparative Example 7 | 90 | normal | poor | 3.1 |

As shown in Table 4, the compositions of Examples 1 to 8 were all excellent in adhesiveness, storage property, pot time, and shear strength.

On the other hand, Comparative Examples 1 to 7 was insufficient in shear strength. Specifically, Comparative Example 1 containing a small amount of the silane polymer was insufficient in shear strength, and Comparative Example 4 containing an excess of the first epoxy resin and Comparative Example 6 without the second epoxy resin were insufficient in adhesiveness and shear strength. In addition, Comparative Example 2 containing an excess of the silane polymer, Comparative Example 3 without the first epoxy resin, and Comparative Example 5, in which the first epoxy resin had the epoxy equivalent greater than the second epoxy resin, were insufficient in storage property. In addition, Comparative Example 7 including carbon black was insufficient in pot time.

## Claims

1. A two-component primer composition for a glass adhesive comprising,
a main part comprising a silane polymer, a first epoxy resin and acrylic polymer; and
a curing agent part comprising a second epoxy resin,
wherein the epoxy equivalent of the first epoxy resin is smaller than the epoxy equivalent of the second epoxy resin,
wherein the main part contains 20 to 50 parts by weight of the silane polymer, 0.1 to 10 parts by weight of the first epoxy resin and 10 to 30 parts by weight of the acrylic polymer, wherein the silane polymer is prepared from a silane composition containing an epoxy silane and an amino silane, and
wherein the composition does not contain inorganic pigments and dispersants.

2. The two-component primer composition for the glass adhesive according to claim 1, wherein the first epoxy resin has an epoxy equivalent of less than 800 g/eq, and a weight average molecular weight of 500 g/mol or less.

3. The two-component primer composition for the glass adhesive according to claim 1, wherein the second epoxy resin has an epoxy equivalent of 800 to 3,000 g/eq, and a weight average molecular weight of 1,000 to 4,500 g/mol.

4. The two-component primer composition for the glass adhesive according to claim 1, wherein the acrylic polymer is prepared from an acrylic composition comprising an alkyl group containing (meth)acrylate monomer and a hydroxyl group and aromatic ring containing (meth)acrylate monomer.

## Patentansprüche

1. Zweikomponenten-Grundierzusammensetzung für einen Glaskleber, umfassend
einen Hauptteil, der ein Silanpolymer, ein erstes Epoxidharz und Acrylpolymer umfasst; und
einen Härtemittelteil, der ein zweites Epoxidharz umfasst,
wobei das Epoxidäquivalent des ersten Epoxidharzes kleiner als das Epoxidäquivalent des zweiten Epoxidharzes ist,
wobei der Hauptteil 20 bis 50 Gewichtsteile des Silanpolymers, 0,1 bis 10 Gewichtsteile des ersten Epoxidharzes und 10 bis 30 Gewichtsteile des Acrylpolymers enthält, wobei das Silanpolymer aus einer Silanzusammensetzung hergestellt wird, die ein Epoxysilan und ein Aminosilan enthält, und
wobei die Zusammensetzung keine anorganischen Pigmente und Dispergiermittel enthält.

2. Zweikomponenten-Grundierzusammensetzung für den Glaskleber nach Anspruch 1, wobei das erste Epoxidharz ein Epoxidäquivalent von weniger als 800 g/eq und ein gewichtsmittleres Molekulargewicht von 500 g/mol oder weniger aufweist.

3. Zweikomponenten-Grundierzusammensetzung für den Glaskleber nach Anspruch 1, wobei das zweite Epoxidharz ein Epoxidäquivalent von 800 bis 3.000 g/eq und ein gewichtsmittleres Molekulargewicht von 1.000 bis 4.500 g/mol aufweist.

4. Zweikomponenten-Grundierzusammensetzung für den Glaskleber nach Anspruch 1, wobei das Acrylpolymer aus einer Acrylzusammensetzung hergestellt ist, die eine Alkylgruppe, die (Meth)acrylatmonomer enthält, und eine Hydroxylgruppe und einen aromatischen Ring, der (Meth)acrylatmonomer enthält, umfasst.

## Revendications

1. Composition d'apprêt à deux composants pour un adhésif pour verre comprenant :
une partie principale comprenant un polymère de silane, une première résine époxy et un polymère acrylique ; et
une partie agent de durcissement comprenant une seconde résine époxy, ledit équivalent époxy de la première résine époxy étant plus petit que l'équivalent époxy de la seconde résine époxy, ladite partie principale contenant 20 à 50 parties en poids du polymère de silane, 0,1 à 10 parties en poids de la première résine époxy et 10 à 30 parties en poids du polymère acrylique, ledit polymère de silane étant préparé à partir d'une composition de silane contenant un silane époxy et un silane aminé, et
ladite composition ne contenant pas de dispersants et de piments inorganiques.

2. Composition d'apprêt à deux composants pour l'adhésif pour verre selon la revendication 1, ladite première résine époxy possédant un équivalent d'époxy inférieur à 800 g/eq, et un poids moléculaire moyen en poids inférieur ou égal à 500 g/mol.

3. Composition d'apprêt à deux composants pour l'adhésif pour verre selon la revendication 1, ladite seconde résine époxy possédant un équivalent époxy de 800 à 3 000 g/eq, et un poids moléculaire moyen en poids de 1 000 à 4 500 g/mol.

4. Composition d'apprêt à deux composants pour l'adhésif pour verre selon la revendication 1, ledit polymère acrylique étant préparé à partir d'une composition acrylique comprenant un monomère de (méth)acrylate contenant un groupe alkyle et un monomère de (méth)acrylate contenant un groupe hydroxyle et un cycle aromatique.
